# EUROPEAN PATENT APPLICATION

(11) **EP 4 641 893 A1**
(43) Date of publication of application: **29.10.2025**
(21) Application number: 23909408.9
(22) Date of filing: 26.09.2023
(51) Int. Cl.: H02K 9/06

(54) **MOTOR AND CENTRIFUGAL FAN THEREFOR**

(30) Priority: 25.12.2022 CN 202223463786 U; 28.07.2023 CN 202310937324
(71) Applicant: Autoflight (Kunshan) Co., Ltd., Suzhou, Jiangsu 215345 (CN)
(72) Inventor: TIAN, Yu, Suzhou, Jiangsu 215345 (CN); XI, Jinping, Suzhou, Jiangsu 215345 (CN)
(74) Representative: MERH-IP Matias Erny Reichl Hoffmann Patentanwälte PartG mbB
(86) International application number: PCT/CN2023/121425
(87) International publication number: WO 2024/139473

(57) **Abstract**

The invention relates to the field of aircraft technology, and discloses a motor and a centrifugal fan thereof. The centrifugal fan of the invention comprises a centrifugal fan body, comprising a plurality of main air ducts circumferentially surrounding the rotation axis of the centrifugal fan; an air duct ring, comprising a plurality of extended air ducts circumferentially surrounding the rotation axis of the centrifugal fan; the air duct ring is configured to be sleeved on the centrifugal fan body so that the extended air ducts and the main air ducts are connected one-to-one. The present invention extends the airflow ducts of the centrifugal fan, increases the outer linear speed of the centrifugal fan, expands the heat dissipation area for the airflow, significantly improves heat dissipation efficiency, and allows for simple installation and replacement.

## Description

### FIELD OF THE DISCLOSURE

The present invention relates to the field of aircraft, in particular to a motor and a centrifugal fan thereof.

### BACKGROUND OF THE INVENTION

When the motor is installed in the narrow space of an aircraft arm, increasing the internal heat dissipation area of the motor leads to significantly higher internal flow resistance, which instead reduces heat dissipation efficiency. This further diminishes the already limited heat dissipation capacity of the centrifugal fan.

### SUMMARY OF THE INVENTION

The purpose of the present invention is to provide a motor and its centrifugal fan. The centrifugal fan of the present invention extends the airflow ducts, increases the outer linear speed of the centrifugal fan, expands the heat dissipation area for the airflow, and improves the heat dissipation efficiency.

To solve the above technical problem, the present invention provides a centrifugal fan, comprising: a centrifugal fan body, comprising a plurality of main air ducts circumferentially arranged around the rotational axis of the centrifugal fan; an air duct ring, comprising a plurality of extended air ducts circumferentially arranged around the rotational axis of the centrifugal fan; the air duct ring is configured to be sleeved onto the centrifugal fan body so that the extended air ducts and the main air ducts are connected one-to-one.

The present invention further provides a motor, comprising the centrifugal fan as described above. The centrifugal fan is connected to the rotating shaft of the motor via bolts.

Preferably, the centrifugal fan body and the air duct ring have a plurality of positioning slots and fixing brackets, respectively, arranged at opposite edges, wherein the fixing brackets correspond one-to-one with the positioning slots for connection.

Preferably, the fixing brackets are bolted to the centrifugal fan body.

Preferably, the air duct ring comprises an upper panel, a lower panel, and a plurality of partition plates between the upper panel and the lower panel, wherein any two adjacent partition plates, together with the upper panel and the lower panel, form the extended air ducts.

Preferably, the fixing brackets are provided with through holes, and the positioning slots are provided with mounting holes, when the air duct ring is sleeved onto the centrifugal fan body, the through holes align with the mounting holes.

Preferably, the extended air duct is provided with a damper and with a damper rotating shaft, the damper is configured to rotate around the damper rotating shaft, and a bias spring is sleeved on the damper rotating shaft, a restoring force of the bias spring keeps the damper closed when no airflow passes through the extended air duct.

Preferably, the damper opens around the damper rotating shaft under the thrust of the airflow when the air flows through the extended air duct.

Preferably, the main air duct and the extended air duct are connected to form a curved duct.

Preferably, the centrifugal fan body comprises a plurality of fan blades, with a diameter of 250-288 mm and an outlet angle of 120-130 degrees.

The present invention extends the airflow ducts by the centrifugal fan, increases the outer linear speed of the centrifugal fan, expands the heat dissipation area for the airflow, and significantly improves the heat dissipation efficiency, while ensuring simple installation and replacement.

### BRIEF DESCRIPTION OF DRAWINGS

FIG. 1 is a structural diagram of the motor and its centrifugal fan according to an embodiment of the present invention;
FIG. 2 is an exploded view of the centrifugal fan body and of the air duct ring according to an embodiment of the present invention;
FIG. 3 is a structural diagram of the motor and its centrifugal fan body according to an embodiment of the present invention;
FIG. 4 is a structural diagram of the air duct ring according to an embodiment of the present invention.

### DETAILED DESCRIPTION

The technical solutions of the invention will be clearly and completely described below in conjunction with the accompanying drawings. Apparently, the described embodiments are part of the embodiments of the invention, but not all of them. Based on the embodiments of the present invention, all other embodiments obtained by persons of ordinary skill in the art without making creative efforts belong to the scope of protection of the present invention.

Unless the context requires otherwise, throughout the specification and claims, the word "comprise" and variations such as "include" and "have" should be construed in an open, inclusive sense, i.e. should be interpreted as "including, but not limited to".

The following will be combined with the accompanying drawings to describe the various embodiments of the present invention in detail, so as to more clearly understand the purpose, characteristics and advantages of the present invention. It should be understood that the embodiments shown in the accompanying drawings are not intended to limit the scope of the present invention, but are only intended to illustrate the essential spirit of the technical solution of the present invention.

References throughout the specification to "one embodiment" or "an embodiment" mean that a particular feature, structure, or characteristic described in connection with the embodiment is included in at least one embodiment. Thus, the appearance of "in one embodiment" or "in an embodiment" in various places throughout the specification are not necessarily all referring to the same embodiment. In addition, the particular features, structures, or characteristics may be combined in any manner in one or more embodiments.

As used in this specification and the appended claims, the singular forms "a", "an", and "the" include plural referents unless the context clearly dictates otherwise. It should be noted that the term "or" is generally employed in its sense including "and/or" unless the context clearly dictates otherwise.

In the following description, in order to clearly demonstrate the structure and working mode of the utility model, many directional words will be used for description, but the words "front", "back", "left", "right", "outside", "inside", "outward", "inward", "up", "down", etc. should be understood as convenient terms and should not be understood as restrictive terms.

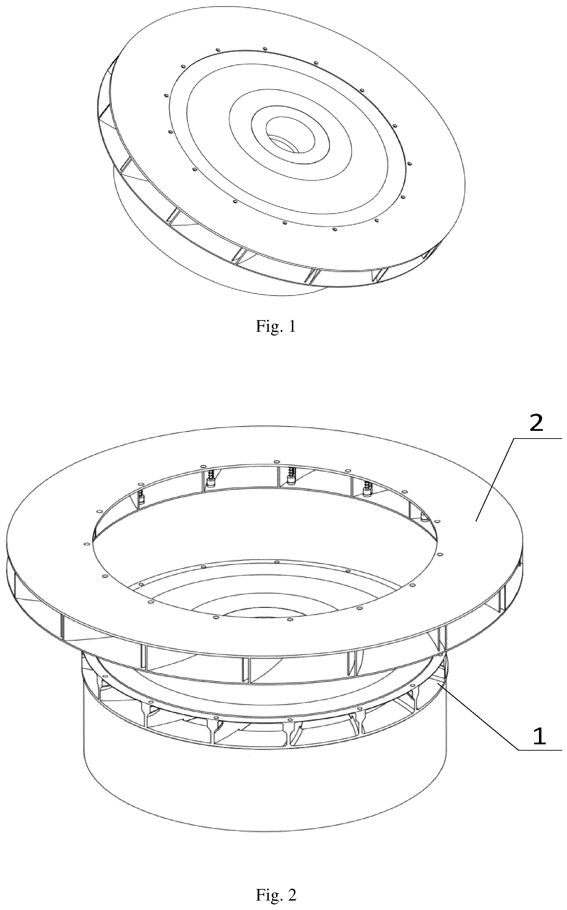

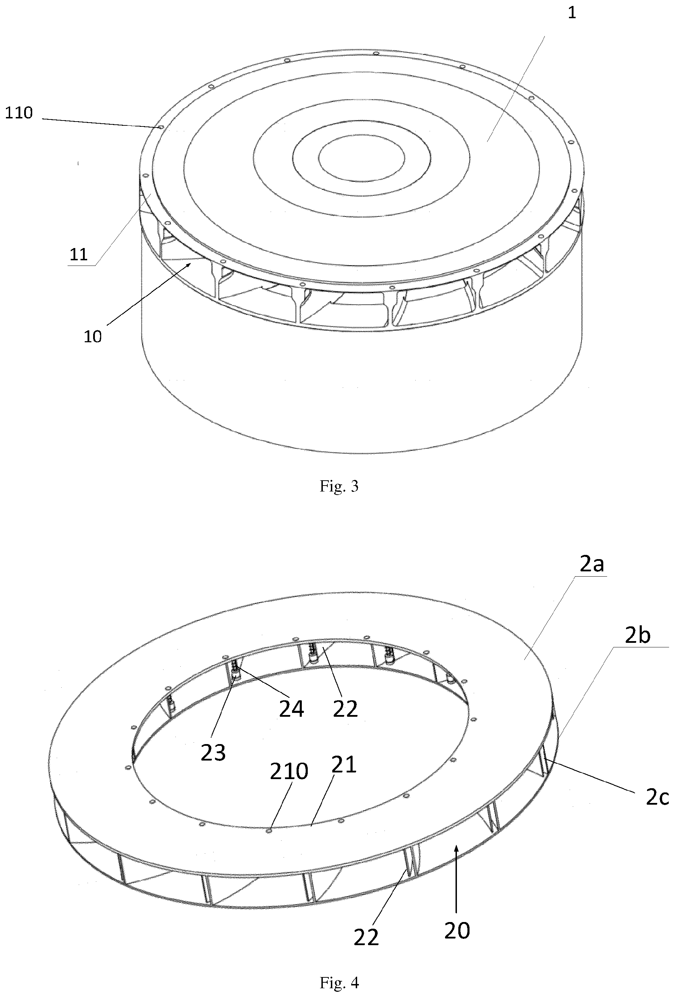

The embodiments of the invention are described below with reference to the accompanying drawings. As shown in FIG. 1 to FIG. 4, the centrifugal fan of this embodiment comprises: a centrifugal fan body 1 and an air duct ring 2. The centrifugal fan body 1 comprises a plurality of main air ducts 10 circumferentially arranged around the rotational axis of the centrifugal fan. The air duct ring 2 comprises a plurality of extended air ducts 20 circumferentially arranged around the rotational axis of the centrifugal fan. The air duct ring 2 can be sleeved onto the centrifugal fan body 1so that the extended air ducts 20 and the main air ducts 10 are connected one-to-one. Specifically, the air duct ring 2 comprises an upper panel 2a, a lower panel 2b, and a plurality of circumferentially arranged partition plates 2c between the upper panel 2a and the lower panel 2b. Any two adjacent partition plates 2c, together with the upper panel 2a and the lower panel 2b, form the extended air ducts 20. Each extended air duct 20 is provided with a damper 22 and a damper rotating shaft 23. The damper 22 can rotate around the damper rotating shaft 23, and a bias spring 24 is sleeved on the damper rotating shaft 23. The restoring force of the bias spring 24 keeps the damper 22 closed when no airflow passes through the extended air duct 20. The damper 22 opens under the thrust of the airflow when air flows through the extended air duct 20.

Preferably, the fan blades have a curved design, with a diameter of 250-288 mm and an outlet angle of 120-130 degrees. Such fan blade design pressurizes and accelerates the airflow, improving the aerodynamic profile and thereby enhancing heat dissipation efficiency. The main air ducts 10 and the extended air ducts 20 are connected to form a curved duct, further improving pressurization and acceleration effects. The centrifugal fan body 1 and the air duct ring 2 have a plurality of positioning slots 11 and fixing brackets 21, respectively, arranged at opposite edges. The fixing brackets 21 fit precisely into the positioning slots 11, providing positioning for the installation of the air duct ring 2. Additionally, the fixing brackets 21 are provided with through holes 210, and the positioning slots 11 are provided with mounting holes 110. When the air duct ring 2 is sleeved onto the centrifugal fan body 1, the through holes 210 align with the mounting holes 110, allowing the fixing brackets 21 to be connected to the centrifugal fan body 1 via bolts. The fixing brackets 21 can be a ring connected to the upper panel 2a and extending toward its inner center, or a plurality of protruding structures arranged at intervals and extending from the upper panel 2a toward its inner center.

Due to the limited installation space in the body of the aircraft, it is impossible to increase the size of the motor to enlarge the centrifugal fan. Without changing the motor diameter, the present invention adopts the method of installing the air duct ring on the centrifugal fan body to extend the airflow ducts of the centrifugal fan, increase the outer linear speed of the centrifugal fan, and expand the heat dissipation area for the airflow, thereby improving heat dissipation efficiency while ensuring simple installation and replacement. When installing the motor, the motor can first be installed into the aircraft arm, leaving the centrifugal fan body exposed outside the arm. The air duct ring is then sleeved onto the centrifugal fan body, placing the entire centrifugal fan above the arm. This not only improves heat dissipation efficiency but also ensures convenient installation and maintenance.

The second embodiment of the present invention provides a motor, comprising the centrifugal fan described above. The centrifugal fan is connected to the rotating shaft of the motor via bolts. Without changing the motor diameter, the present invention adopts the method of installing the air duct ring on the centrifugal fan body to extend the airflow ducts of the centrifugal fan, increase the outer linear speed of the centrifugal fan, and expand the heat dissipation area for the airflow, thereby improving heat dissipation efficiency while ensuring simple installation and replacement.

The above embodiments are merely illustrative of the principles of the present invention and its effects, which is not intended to limit the invention. Any person skilled in the art can modify or alter the above embodiments without departing from the purpose and the scope of the present invention. Accordingly, all equivalent modifications or alterations made by persons having ordinary knowledge in the art, without departing from the purpose and technical ideas disclosed in the present invention, shall still be covered by the claims of the invention.

## Claims

1. A centrifugal fan, comprising: a centrifugal fan body (1) comprising a plurality of main air ducts (10) circumferentially arranged around a rotation axis of the centrifugal fan; an air duct ring (2) comprising a plurality of extended air ducts (20) circumferentially arranged around the rotation axis of the centrifugal fan; the air duct ring (2) is configured to be sleeved onto the centrifugal fan body (1) so that the extended air ducts (20) and the main air ducts (10) are connected one-to-one.

2. The centrifugal fan according to claim 1, wherein the centrifugal fan body (1) and the air duct ring (2) have a plurality of positioning slots (11) and fixing brackets (21), respectively, arranged at opposite edges, wherein the fixing brackets (21) correspond one-to-one with the positioning slots (11) for connection.

3. The centrifugal fan according to claim 2, wherein the fixing brackets (21) are bolted to the centrifugal fan body (1).

4. The centrifugal fan according to claim 1, wherein the air duct ring (2) comprises an upper panel (2a), a lower panel (2b), and a plurality of partition plates (2c) between the upper panel (2a) and the lower panel (2b), wherein any two adjacent partition plates (2c), together with the upper panel (2a) and the lower panel (2b), form the extended air ducts (20).

5. The centrifugal fan according to claim 2, wherein the fixing brackets (21) are provided with through holes (210), and the positioning slots (11) are provided with mounting holes (110), when the air duct ring (2) is sleeved onto the centrifugal fan body (1), the through holes (210) align with the mounting holes (110).

6. The centrifugal fan according to claim 2, wherein the extended air duct (20) is provided with a damper (22) and with a damper rotating shaft (23), the damper (22) is configured to rotate around the damper rotating shaft (23), and a bias spring (24) is sleeved on the damper rotating shaft (23), a restoring force of the bias spring (24) keeps the damper (22) closed when no airflow passes through the extended air duct (20).

7. The centrifugal fan according to claim 6, wherein the damper (22) opens around the damper rotating shaft (23) under the thrust of the airflow when the air flows through the extended air duct (20).

8. The centrifugal fan according to claim 1, wherein the main air duct (10) and the extended air duct (20) are connected to form a curved duct.

9. The centrifugal fan according to claim 1, wherein the centrifugal fan body (1) comprises a plurality of fan blades, with a diameter of 250 to 288 mm and an outlet angle of 120 to 130 degrees.

10. A motor, comprising the centrifugal fan according to any one of claims 1 to 9, wherein the centrifugal fan is connected to a rotating shaft of the motor via bolts.
